# EUROPEAN PATENT SPECIFICATION

(11) **EP 3 127 418 B1**
(45) Date of publication and mention of the grant of the patent: **06.06.2018**
(21) Application number: 15772965.8
(22) Date of filing: 01.04.2015
(51) Int. Cl.: A01D 87/12, A01D 90/08, A01F 29/00, A01K 5/00, A01F 29/10

(54) **IMPROVED FODDER-DISPENSING DEVICE**
VERBESSERTE FUTTERSPENDEVORRICHTUNG
DISPOSITIF DISTRIBUTEUR DE FOURRAGE PERFECTIONNÉ

(30) Priority: 04.04.2014 ES 201430506 P
(43) Date of publication of application: 08.02.2017
(73) Proprietor: La Parra del Soberal, S.L.U., 10859 Santibañez El Alto (Caceres) (ES)
(72) Inventor: GONZALEZ GARCIA, Juan, 10859 - SANTIBAÑEZ EL ALTO (CACERES) (ES); GONZALEZ GARCIA, Jesús, 10859 - SANTIBAÑEZ E ALTO (CACERES) (ES)
(74) Representative: Herrero & Asociados, S.L.
(86) International application number: PCT/ES2015/070260
(87) International publication number: WO 2015/150614

(56) References cited:
- WO-A1-2005/079556
- DE-A1- 2 618 942
- DE-U1- 29 807 566
- ES-U- 1 056 934
- FR-A1- 2 472 908
- US-A- 4 232 986
- US-A- 4 537 548
- US-A- 5 639 199
- US-A1- 2001 012 480
- US-B1- 7 004 706
- US-B1- 7 004 706

## Description

### Technical field of the invention

The present invention corresponds to the technical field of devices used to dispense fodder destined for feeding animals, spreading it across the fields where said feeding takes place.

### Background of the invention

In mixed farms, the fodder used to feed livestock or other animals is of paramount importance. One of the most widespread options for the preservation thereof is by packing in bales which are stored until the moment of offering them as feed to the animals. The most currently used bales are cylindrical bales larger than the aforementioned parallelepiped-shaped bales.

Once the bales are prepared, the next step is to feed the animals by shredding the fodder contained in the bale, dispensing it uniformly across the grazing fields.

To this end, there are different types of machines, the most widespread having a device that shreds the bale by means of toothed wheels, rollers or similar. These machines have the drawback that the resulting fodder is indicated as feed in stables where shredded fodder is not wasted, but not for distribution across free-range grazing lands.

Another possibility for distributing the fodder of the bales is to carry out the process manually. Therefore, in this case the bales are loaded onto the trailer of a tractor and, while it moves across the fields, an operator in the trailer lifts the hay using a pitchfork and pitches it as the tractor moves along.

This method also has drawbacks, as it requires two operators: the tractor driver and the operator riding in the trailer, in addition to being a slow process and dependent on the physical strength of the operator in the trailer, due to which large bales such as cylindrical bales are very difficult to dispense using this method.

In turn, there are machines mounted on trailers prepared to load these bales and break up and dispense the fodder, spreading it across the grazing field while said trailer moves forward.

As an example of the state of the art, mention can be made of reference documents GB2158111, US3035729 and ES1056934-U.

The first of these documents, with reference GB2158111, relates to a machine for distributing fodder as of cylindrical bales, which consists of a frame whereon the bale rotates powered by spiked strips moved by chains. The bale is unwinded and the fodder gradually falls down the side of the device.

This machine has the drawback that the spiked strips do not unwind the bale uniformly. In addition, it does not allow loading of more than a single bale to perform the distribution thereof, and must move in order to be loaded with a new bale when the initial bale is finished.

Reference document US3035729 relates to a machine mounted on a trailer, where said machine has a point with blades that break up the bale, stripping off the fodder and making it fall on the strips moved by chains that dispense it outside of the trailer. There is another point with blades that serves to prevent the transporter formed by the strips from expelling a large amount of fodder from the trailer at once.

This machine improves the conditions of earlier machines, but is very complicated with respect thereto, due to the existence of various points perpendicular therebetween that imply various gears and a greater possibility of malfunctions. Also, in the case of using cylindrical bales, the device will be much less efficient.

In order to resolve these drawbacks, there is another fodder-distributing device in the state of the art such as that defined in reference document ES1056934-U, of which the applicant itself is the holder.

This document relates to a device adaptable to means of transport comprising a cylindrical fodder bale unwinding zone having impelling means that move it towards the rear part, where it encounters a horizontal point with a series of blades which, in its rotating movement, push the bale, making it rotate towards the front part. This backward bale rotating movement combined with its forward movement impelled by the impelling means gives rise to an unwinding of the bale such that it exits the device from the rear part, spreading across the grazing field as the means of transport move thereacross.

Likewise, it comprises a bale deposit zone disposed in front of the unwinding area and that, once all the bales in the bale unwinding zone have been dispensed, it deposits a new bale on said unwinding zone by means of a tilting movement in order to begin dispensing it.

This dispensing device has significant advantages over earlier devices. Thus, it can be fully handled by a single operator who will drive the device transport means, distributing the fodder across the grazing surface and, when the bale is finished, activates the means that facilitate the transfer of a second bale from the deposit zone to the unwinding zone, continuing with the distribution of this new bale. This implies greater fodder bale capacity in the device, with which less time is lost having to move the device towards the bale storage zone to load a new bale.

In this manner, greater productivity in the distribution is achieved, on reducing the number of operators to a minimum and achieving a reduction in distribution times. Likewise, it enables fuel savings, an increased number of hectares that can be supplied by a device, greater ease of handling and a simple mechanism, which is therefore not difficult to operate and maintain.

However, this device continues having a series of drawbacks. Therefore, while having a deposit zone for one or two additional bales to that being unwound and dispensed, this is currently insufficient. In extensive farms, the capacity of this dispensing device is insufficient, since with two or three bales per run of the device it is not possible to encompass the extensive surface area typical of mixed farms. Thus, on finishing the distribution of the bales loaded on the device, the tractor to which it is connected must return to the farm storage zone, where two or three additional bales are loaded onto the device and must return to the point where the initial load was completed in order to continue with the distribution of the new bales.

This implies an enormous loss of time, higher fuel consumption, longer dispensing times in grazing fields,... all of which lowers productivity.

In addition, not being able to supply fodder to the entire grazing field in the least possible time and having to interrupt the supply due to having to return to load new bales onto the device implies consequences for the animals themselves.

Therefore, if the fodder is spread uniformly across the grazing fields in an acceptable period of time, the animals would be distributed throughout said grazing fields feeding peacefully and at a normal rate due to having sufficient fodder in their action zone. The well-being of these animals and their tranquillity is a very important and necessary condition to ensure their good health and the high quality of the products obtained therefrom.

On the contrary if, as in this case, the device must leave the distribution unfinished to go back for more fodder, a process that requires considerable time to reach the storage zone, load the bales onto the same tractor, pitch them and return, the animals tend to group together in the zone in which the fodder has already been dispensed, with ensuing unwanted encounters between animals who feel threatened or defend their leadership and right to the fodder in the zone where a certain animal was there first.

In this way, either because they are obliged to seek the fodder that other animals already consider theirs or have to defend it due to being within an initial distribution zone, the animals suffer highly unadvisable stressful situations, which entails obtaining lower-quality products.

### Description of the invention

The improved fodder-dispensing device presented herein is of the type used to dispense fodder for livestock and is formed by a powered carriage adaptable to means of transport for moving across the surface where said feeding takes place.

This powered carriage comprises an unwinding zone on the rear part in the direction of travel and a zone where the bales are deposited on the rear thereof, tilting on the unwinding zone.

Said unwinding zone has a first clearing surface whereon a first cylindrical fodder bale has been disposed, while the deposit zone has a second inclined deposit surface, suitable for at least one additional bale.

In order to unwind and dispense the bale, the unwinding zone has means for impelling the first bale towards the rear of the carriage where it has an opening wherethrough the unwound bale exits, the height of which is defined by a series of blades that rotate about a horizontal point simultaneously to the action of said impelling means which, as a result of their movement, push the bale towards the front part of the unwinding zone, causing the rotation and unwinding of the bale.

This improved fodder-dispensing device also comprises at least a first tilting storage and unloading platform disposed at a height above the first clearing surface or above the second inclined deposit surface, said height being greater than the diameter of the bales disposed on said surfaces respectively and where at least one of the tilting platforms has a first end wherethrough the bales are unloaded onto the powered carriage and a second opposite end for retaining the bales.

Likewise, it comprises fixing means and tilting means of said at least one tilting platform.

According to a preferred embodiment of the improved fodder-dispensing device, it has two tilting platforms, front and rear, in the direction of travel, independently operable and disposed such that the distance between the respective second ends of both is greater than the sum of the lengths of the two tilting platforms, thereby ensuring that the first ends thereof do not come into contact at any time during the tilting travel thereof.

According to another preferred embodiment, each of said two tilting platforms has different bale capacities.

According to another aspect of the invention, in a preferred embodiment the tilting means of the at least one tilting platform in a preferred embodiment comprise means for actuating the first end thereof, and a support and rotation point disposed on the second end of the tilting platform. In accordance with one embodiment, these actuation means are formed by a pneumatic or hydraulic cylinder.

According to a preferred embodiment, the at least one tilting platform has a first loading position of the powered carriage, with an inclination such that the first end thereof is higher than its second end. In turn, it has a second loading and storage position of said at least one tilting platform, wherein it is disposed inclined proximate to the horizontal, such that its first end is higher than the second. And a third unloading position wherein said at least one tilting platform is disposed inclined over the powered carriage, with its first end positioned underneath its second end.

In accordance with a preferred embodiment, when the at least one tilting platform is the rear tilting platform and therefore is disposed above the unwinding zone, it comprises fixing means for fixing the second loading and storage position thereof.

In accordance with a preferred embodiment, these fixing means are formed by corresponding support rods foldable over a first end thereof which is fixed respectively to one of the sides of the deposit zone, while the second end of each of said support rods in the second loading and storage position is coupled to a side, respectively, of the base of the tilting platform.

Likewise, and according to a preferred embodiment, when the at least one tilting platform is on an unwinding zone, it comprises means for securing the bales to the first end thereof.

The means for securing at least one tilting platform to the powered carriage, in accordance with one preferred embodiment of the invention, are formed by at least two lateral fixing rods and a horizontal rod therebetween whereto the second end of one of the tilting platforms is fixed.

According to a preferred embodiment, the at least one tilting platform comprises second means for fixing the bales to the second end thereof.

Likewise, and in accordance with another preferred embodiment, the at least one tilting platform comprises lateral fixing means of the bales. These lateral fixing means, according to a preferred embodiment, are formed by a lateral rod that emerges inclined from each side of the at least one tilting platform.

With the improved fodder-dispensing device proposed herein a significant improvement over the state of the art is obtained.

This is so because greater bale capacity is achieved for the dispensing device and this entails savings in time and money, since less fuel is consumed and work times are shorter on spreading out the time intervals in which the device must be newly loaded.

Also, it is achieved by means of a simple device which therefore does not require many repairs or is going to cause major malfunctions. Likewise, the additional investment required by this device, while having greater capacity than those of the state of the art, is not higher. This is so because the loading of the device is carried out with the same tractor that constitutes the means of transport of the device, which avoids the need for a crane for these tasks; also, these means of transport do not have to be very powerful, as problem-free movement is possible using a less than 75 HP tractor, due to which the investment required therein is small.

Likewise, productivity is increased thanks to the fact that only one operator is needed, who will be in charge of driving the means of transport and actuating the unloading of new fodder bales in the powered carriage when the initial bales loaded thereon have been completely dispensed.

Likewise, it has a very significant advantage from the viewpoint of both animal and economic well-being, as both are related. Therefore, if the animal is in a perfect state of health and has led a peaceful and pleasant life, the products obtained therefrom are of high quality, the complete opposite of those cases where the animals were uncomfortable, badly looked after, stressed, etc.

Therefore, through this improved fodder-dispensing device, on enabling the fodder to be dispensed more uniformly in terms of time across most of the surface area of the grazing field, the animals find the food easily, without having to move to more remote areas or even fight with other animals to obtain it. Therefore, a much more peaceful and relaxed coexistence between the animals is achieved, this high quality of life subsequently giving rise to very high quality products.

### Brief description of the drawings

In order to complement the description being made and with the object of helping to better understand the characteristics of the invention, in accordance with a preferred embodiment thereof, said description is accompanied, as an integral part thereof, by a set of drawings where, in an illustrative and nonlimiting manner, the following has been represented:
- Fig. 1: shows a perspective view of an improved fodder-dispensing device with the tilting platforms in a first loading position of the second inclined deposit surface of the powered carriage for a preferred embodiment of the invention;
- Fig. 2: shows a perspective view of an improved fodder-dispensing device with the tilting platforms in a second loading and storing position of said tilting platforms for a preferred embodiment of the invention;
- Fig. 3: shows a perspective view of an improved fodder-dispensing device with the tilting platforms in a third loading position, for a preferred embodiment of the invention; and
- Fig. 4: shows a schematic perspective view of an improved fodder-dispensing device with the tilting platforms, for a preferred embodiment of the invention.

### Detailed description of a preferred embodiment of the invention

In light of the foregoing figures, it can be observed how, in a preferred embodiment of the invention, the improved fodder-dispensing device proposed herein is of the type used to dispense fodder for livestock, made up of a powered carriage (1) adaptable to means for moving along the surface in which said dispense takes place.

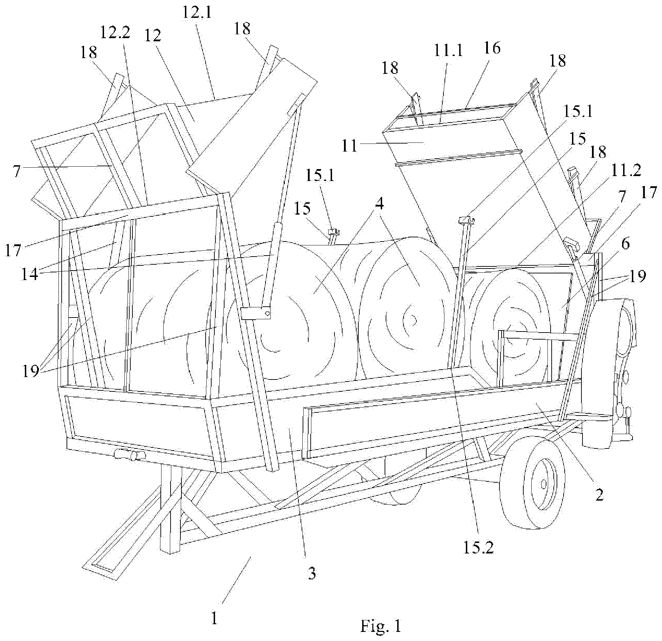

As shown in Figures 1 to 4, the powered carriage 1 has an unwinding zone (2) having a first clearing surface (2.1) on the rear part thereof in the direction of travel and a bale deposit zone (3) having a second inclined surface (3.1) suitable for two additional bales (4), on the front part thereof. This deposit zone (3) swivels over the unwinding zone (2).

Therefore, the process starts with a first cylindrical fodder bale (4) disposed on the first clearing surface (2.1) and two additional bales (4) on the second inclined surface (3.1). The unwinding (2) zone in which said first clearing surface (2.1) is found has impelling means that move said first cylindrical bale (4) towards the end part of the powered carriage (1). In this end part, the powered carriage (1) has an outlet opening (5) of the unwound bale (20) whose height is defined by two blades (6) that rotate about a horizontal point.

In this manner, the blades (6) push the bale (4) situated in the unwinding zone (2) forwards, simultaneously to the action of the impelling means, which moves them backwards, generating the rotation and unwinding of said bale (4) which exits through the outlet opening (5).

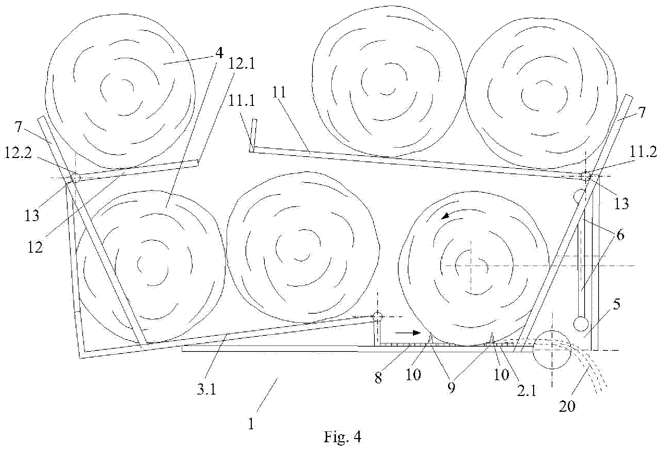

In this preferred embodiment, as shown in figure 4, the impelling means are formed by two chains (8) that run along the sides of the first clearing surface (2.1) impelled by pairs of wheels disposed at the ends of horizontal points disposed on the front and on the rear of said first clearing surface (2.1) and rods (9) which are joined to chains (8) sliding over the first clearing surface (2.1) in a continuous movement. Likewise, each rod (9) has a plurality of spikes (10) perpendicular thereto to improve the dragging of the fodder.

Also, this improved fodder-dispensing device has two tilting storage and loading platforms (11, 12), rear and front, in the direction of travel, wherein the rear tilting platform (11), as shown in figures 1 to 3, is disposed at a height above the first clearing surface (2.1), said height being greater than the diameter of the bale (4) disposed on said first clearing surface (2.1). Furthermore, the front tilting platform (12) is disposed at a height above the second inclined deposit surface (3.1), said height being greater than the diameter of the bales (4) disposed on said second inclined surface (3.1).

Likewise, both tilting platforms, rear (11) and front (12), have a first end (11.1, 12.1) for unloading the bales from the powered carriage (1) and a second, opposite end (11.2, 12.2) for retaining the bales.

Also, the improved fodder-dispensing device comprises means for securing and means for tilting said tilting platforms (11, 12).

Both tilting platforms (11, 12) can be actuated independently and are disposed such that the respective second ends (11.2, 12.2) thereof are separated by a distance greater than the sum of the lengths of both tilting platforms (11, 12).

Likewise, as can be observed in figures 1 to 3, the rear tilting platform (11) is suitable for loading two fodder bales (4), while the front tilting platform (12) has a capacity for a single bale (4).

In this preferred embodiment of the invention, the tilting means of these tilting platforms (11, 12) are formed by a support and rotation point (13) disposed on the second end (11.2, 12.2) of each tilting platform (11, 12, 13) and by means for actuating the first end (11.1, 12.1) of each platform, which in this embodiment is formed by a hydraulic cylinder (14), on each side thereof.

Both tilting platforms (11, 12) have three positions. Thus, each tilting platform has a first loading position of the powered carriage (1), which can be observed in figure 1, where both platforms are in said first position and, as shown, both tilting platforms (11, 12) are inclined such that the first end (11.1, 12.1) is in a much higher position than the second end (11.2, 12.2).

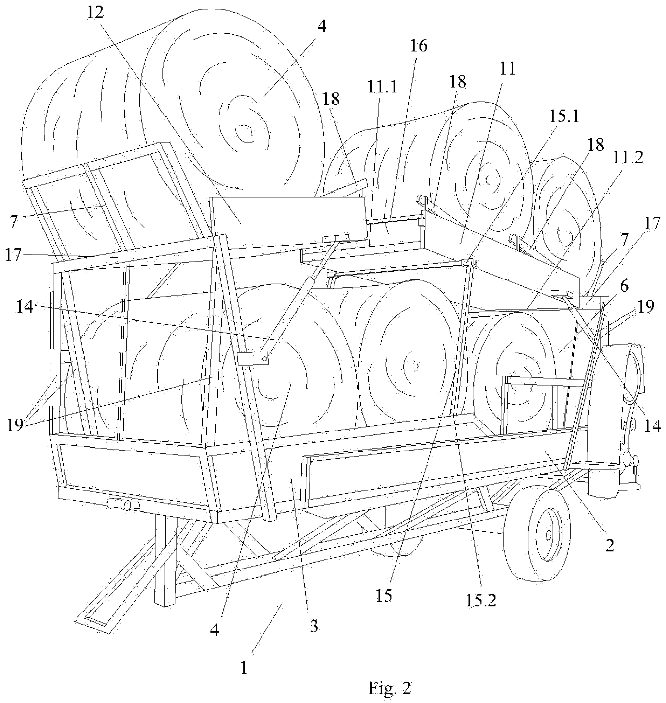

Figure 2 shows, for both tilting platforms (11, 12), a second loading and storage position thereof, wherein the two platforms have a nearly horizontal position, the first end (11.1, 12.1) being slightly higher with respect to the second end (11.2, 12.2).

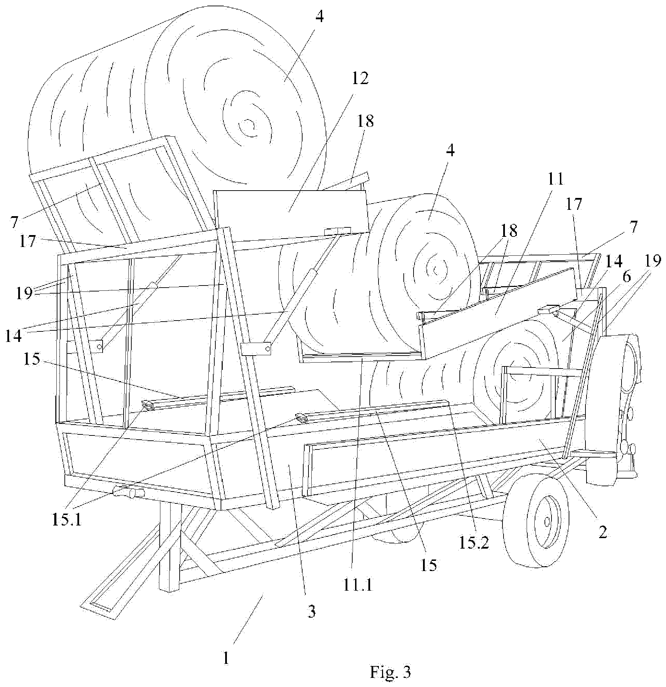

Since both tilting platforms (11, 12) can be actuated indistinctly, a possible situation is that shown in figure 3, wherein the front tilting platform (12) is disposed in a second bale loading and storage position, while the rear tilting platform (11) is in a third unloading position, wherein the bales (4) of the powered carriage (1) have been fully dispensed and a new bale (4) is unloaded in the powered carriage (1) to continue unwinding it.

In this situation, the rear tilting platform (11) is inclined over the powered carriage (1), such that the first end (11.1) thereof is disposed underneath its second end (11.2).

In the case of the rear tilting platform (11), disposed in the unwinding zone (2), this tilting platform has means for fixing the second loading and storage position thereof, which in this preferred embodiment of the invention are formed by two support rods (15) foldable over a first end (15.1) thereof fixed to one of the sides, respectively, of the deposit zone (3). The second end (15.2) of these two support rods (15) in this second position is coupled to one side, respectively, of the base of the rear tilting platform (11).

This rear tilting platform (11) has, in turn, first securing means for securing the bales (4) to the first end (11.1) thereof, which in this preferred embodiment are formed by a closing rod (16), while both the rear (11) and front (12) tilting platforms comprise second securing means for securing the bales (4) to the second end thereof, which are formed by retaining rods (7).

Likewise, both tilting platforms (11, 12) have lateral fixing means for fixing the bales (4), which in this preferred embodiment of the invention are formed, as shown in figures 1 to 3, by two inclined lateral rods (18) that emerge respectively from one of the sides of each tilting platform (11, 12).

As can be observed in figures 1 to 3, the securing means for securing both tilting platforms (11, 12) to the powered carriage (1) in this preferred embodiment of the invention are formed by two lateral fixing rods (19) on each side thereof and a horizontal joining rod (17) therebetween. The second end (11.2, 12.2) of the respective tilting platform (11, 12) is fixed to these horizontal joining bars (17).

Significant improvements are achieved with respect to the state of the art with the dispenser device presented herein.

Thus, with this improved device a greater load capacity thereof is obtained, which enables the fodder to be dispensed across grazing fields in a more uniform manner in terms of both space and time.

Work times are reduced on spacing the time required to load new bales, the consumption of fuel is also reduced and, therefore, CO2 emissions into the atmosphere, and the device is perfectly usable by a single operator, thereby increasing process productivity.

Therefore, it is a very effective device that also has a simple constitution that favours the absence of malfunctions.

Likewise, the investment in device transport means, for example, a tractor, is not greater than that in the existing devices, while having less capacity, since with a less than 75 HP tractor it is perfectly possible to move the device proposed herein. This tractor is in charge of loading the device, thereby avoiding the need for an additional crane.

In addition to all of these factors, it is important to point out a great advantage of this device in relation to the living conditions of the animals at whose feeding it is aimed. Therefore, a uniform distribution of the fodder over time is achieved, in addition to reducing the time required to complete the process. On having a greater number of bales, it is possible to dispense them across most of the surface area, much greater than in the case of the devices of the state of the art, as a result of which the animals are calmer and more relaxed due to having sufficient food in equal amounts for all.

This balanced, stress-free life leads to happy and healthy animals that generate higher-quality products.

## Claims

1. An improved fodder-dispensing device, of the type used to dispense fodder for livestock, formed by a powered carriage (1) adaptable to means for moving over the surface whereon said feeding takes place, which comprises, on the rear part in the direction of travel of the carriage, an unwinding (2) zone having a first clearing surface (2.1) whereon a first cylindrical fodder bale (4) is disposed and, on the front part, a bale deposit zone (3) having a second inclined deposit surface (3.1), suitable for at least one additional bale (4), wherein this bale deposit zone (3) is tiltable over the unwinding zone (2), wherein said unwinding zone (2) comprises means for impelling the first bale (4) towards the end of the carriage, said end having an opening (5) wherethrough the unwound bale (20) exits, whose height is defined by a series of blades (6) that rotate about a horizontal point simultaneously with the action of the impelling means and, in their movement, push the bale (4) towards the front part of the unwinding zone (2), causing the rotation and unwinding of the bale (4), **characterised in that** it comprises at least a first tilting storage and unloading platform (11, 12) disposed above the first clearing surface (2.1) or the second inclined surface (3.1) of the deposit zone, at a height being greater than that of the diameter of the bales (4) disposed on said surfaces respectively and wherein said at least one tilting platform (11, 12) has a first end (11.1, 12.1) for unloading the bales to the powered carriage (1) and a second, opposite end (11.2, 12.2) for retaining the bales, as well as securing means and tilting means of said at least one tilting platform (11, 12).

2. The improved fodder-dispensing device, according to claim 1, **characterised in that** it comprises two tilting platforms (11, 12), a front and rear platform in the direction of travel, where both tilting platforms (11, 12) can be actuated independently and are disposed such that the distance between the respective second ends (11.2, 12.2) thereof is greater than the sum of the lengths of the two tilting platforms (11, 12).

3. The improved fodder-dispensing device, according to claim 2, **characterised in that** both tilting platforms (11, 12) have different bale capacity (4).

4. The improved fodder-dispensing device, according to any of the preceding claims, **characterised in that** the tilting means of the at least one tilting platform (11, 12) comprise means for actuating the first end (11.1, 12.1) thereof, and a support and rotation point (13) on its second end (11.2, 12.2).

5. The improved fodder-dispensing device, according to any of the preceding claims, **characterised in that** the at least one tilting platform (11, 12) has a first loading position of the powered carriage (1) with an inclination such that the first end (11.1, 12.1) thereof is higher than its second end (11.2, 12.2), a second loading and storage position of said at least one tilting platform (11, 12) having an inclination proximate to the horizontal such that the first end (11.1, 12.1) is higher than its second end (11.2, 12.2) and a third unloading position wherein said at least one tilting platform (11, 12) is disposed inclined over the powered carriage (1), with its first end (11.1, 12.1) in a position underneath its second end (11.2, 12.2).

6. The improved fodder-dispensing device, according to any of the preceding claims, **characterised in that** when the at least one tilting platform (11, 12) is the rear tilting platform (11) it comprises fixing means of the second loading and storage position thereof.

7. The improved fodder-dispensing device, according to claim 6, **characterised in that** the fixing means of the second loading and storage position are formed by corresponding support rods (15) foldable over a first end (15.1) thereof, fixed respectively to one side of the deposit zone (3) and a second, free end (15.2) which in the second loading and storage position is coupled to one side, respectively, of the base of said tilting platform (11).

8. The improved fodder-dispensing device, according to any of claims 6 and 7, **characterised in that** said at least one rear tilting platform (11) comprises first means for securing the bales (4) to the first end (11.1) thereof.

9. The improved fodder-dispensing device, according to any of the preceding claims, **characterised in that** the fixing means between the at least one tilting platform (11, 12) and the powered carriage (1) are formed by at least two lateral securing rods (19) and a horizontal joining rod (17) therebetween, whereto the second end (11.2, 12.2) of one of the tilting platforms (11, 12) is secured.

10. The improved fodder-dispensing device, according to any of the preceding claims, **characterised in that** the at least one tilting platform (11, 12) comprises second securing means for securing the bales (4) on the second end (11.2, 12.2) of said tilting platform.

11. The improved fodder-dispensing device, according to claim 4, **characterised in that** the means for actuating the first end (11.1, 12.1) of the at least one tilting platform (11, 12) are formed by a pneumatic or hydraulic cylinder (14).

12. The improved fodder-dispensing device, according to any of the preceding claims, **characterised in that** the at least one tilting platform (11, 12) comprises lateral securing means of the bales (4).

13. The improved fodder-dispensing device, according to claim 12, **characterised in that** the lateral securing means of the bales (4) comprise at least one inclined lateral rod (18) that emerges from the at least one tilting platform (11, 12).

## Patentansprüche

1. Futterspendevorrichtung mit erhöhter Leistungsfähigkeit von der Art, wie sie zum Spenden von Futter für einen Viehbestand verwendet wird und durch einen angetriebenen Wagen (1) gebildet ist, der als Einrichtung zum Bewegen über der Fläche ausgebildet ist, auf der die Fütterung stattfindet, wobei die Vorrichtung an dem hinteren Teil in der Fahrrichtung des Wagens eine Abwickelzone (2) mit einer ersten Auslösefläche (2.1), auf der ein erster zylindrischer Futterballen (4) angeordnet ist, und auf dem vorderen Teil eine Ballenablagezone (3) mit einer zweiten geneigten Ablagefläche (3.1) aufweist, die mindestens für einen zusätzlichen Ballen (4) geeignet ist, wobei diese Ballenablagezone (3) über die Abwickelzone (2) neigbar ist, wobei die Abwickelzone (2) eine Einrichtung zum Antreiben des ersten Ballens (4) zu dem Ende des Wagens aufweist, wobei das Ende eine Öffnung (5) hat, durch welche der abgewickelte Ballen (20) austritt, deren Höhe durch eine Reihe von Klingen (6) festgelegt ist, die sich gleichzeitig mit dem Betrieb der Antriebseinrichtung um einen horizontalen Punkt drehen und bei ihrer Bewegung den Ballen (4) in Richtung zu dem vorderen Teil der Abwickelzone (2) schieben, wodurch die Drehung und das Abwickeln des Ballens (4) bewirkt wird, **dadurch gekennzeichnet, dass** die Vorrichtung mindestens eine erste neigbare Lager- und Entladeplattform (11, 12) aufweist, die über der ersten Ablösefläche (2.1) oder der zweiten geneigten Fläche (3.1) der Ablagezone angeordnet ist an einer Höhe, die größer ist als der Durchmesser der Ballen (4), die auf den Flächen entsprechend angeordnet sind, und wobei die mindestens eine neigbare Plattform (11, 12) ein erstes Ende (11.1, 12.1) zum Ausladen der Ballen auf den angetriebenen Wagen (1) und ein zweites gegenüberliegendes Ende (11.2, 12.2) zum Halten der Ballen sowie eine Befestigungseinrichtung und eine Neigungseinrichtung der Mindestens einen neigbaren Plattform (11, 12) aufweist.

2. Futterspendevorrichtung mit erhöhtem Leistungsvermögen nach Anspruch 1, **dadurch gekennzeichnet, dass** sie zwei neigbare Plattformen (11, 12) aufweist in Form einer in Fahrtrichtung vorderen und einer hinteren Plattform, wobei beide neigbaren Plattformen (11, 12) unabhängig betätigbar sind und so angeordnet sind, dass der Abstand zwischen den entsprechenden zweiten Enden (11.2, 12.2) größer ist als die Summe der Längen der beiden neigbaren Plattformen (11, 12).

3. Futterspendevorrichtung mit erhöhter Leistungsfähigkeit nach Anspruch 2, **dadurch gekennzeichnet, dass** die beiden neigbaren Plattformen (11, 12) eine unterschiedliche Ballenaufnahmekapazität (4) haben.

4. Futterspendevorrichtung mit erhöhter Leistungsfähigkeit nach einem der vorhergehenden Ansprüche, **dadurch gekennzeichnet, dass** die Neigungseinrichtung der mindestens einen neigbaren Plattform (11, 12) eine Einrichtung zum Antrieben des ersten Endes (11.1, 12.1) und einen Halte- und Drehpunkt (13) an ihrem zweiten Ende (11.2, 12.2) aufweist.

5. Futterspendevorrichtung mit erhöhter Leistungsfähigkeit nach einem der vorhergehenden Ansprüche, **dadurch gekennzeichnet, dass** die mindestens eine neigbare Plattform (11, 12) eine erste Ladestellung des angetriebenen Wagens (1) mit einer Neigung derart aufweist, dass das erste Ende (11.1, 12.1) höher liegt als ihr zweites Ende (11.2, 12.2), wobei eine zweite Lade- und Lagerstellung der mindestens einen neigbaren Plattform (11, 12) eine Neigung hat, die ungefähr der Horizontalen entspricht, so dass das erste Ende (11.1, 12.1) höher liegt als das zweite Ende (11.2, 12.2), und eine dritte Abladestellung, wobei die mindestens eine neigbare Plattform (11, 12) geneigt über dem angetriebenen Wagen (1) angeordnet ist, wobei das erste Ende (11.1, 12.1) an einer Position unterhalb des zweiten Endes (11.2, 12.2) liegt.

6. Futterspendevorrichtung mit erhöhter Leistungsfähigkeit nach einem der vorhergehenden Ansprüche, **dadurch gekennzeichnet, dass**, wenn die mindestens eine neigbare Plattform (11, 12) die hintere Plattform (11) ist, sie dann eine Befestigungseinrichtung für die zweite Lade- und Lagerstellung aufweist.

7. Futterspendevorrichtung mit erhöhter Leistungsfähigkeit nach Anspruch 6, **dadurch gekennzeichnet, dass** die Befestigungseinrichtung für die zweite Lade- und Lagerstellung durch entsprechende Haltestäbe (15) gebildet ist, die über ein erstes Ende (15.1) faltbar sind und auf einer Seite der Ablagezone (3) und entsprechend an einem zweiten freien Ende (15.2) befestigt sind, das in der zweiten Lade- und Lagerstellung entsprechend mit einer Seite des Grundgestells der neigbaren Plattform (11) gekoppelt ist.

8. Futterspendevorrichtung mit erhöhtem Leistungsvermögen nach Anspruch 6 oder 7, **dadurch gekennzeichnet, dass** die mindestens eine hintere neigbare Plattform (11) eine Einrichtung zur Befestigung der Ballen (4) an dem ersten Ende (11.1) aufweist.

9. Futterspendevorrichtung mit erhöhtem Leistungsvermögen nach einem der vorhergehenden Ansprüche, **dadurch gekennzeichnet, dass** die Befestigungseinrichtung zwischen der mindestens einen neigbaren Plattform (11, 12) und dem angetriebenen Wagen (1) durch mindestens zwei seitliche Befestigungsstäbe (19) und einen horizontalen Verbindungsstab (17) dazwischen gebildet ist, wodurch das zweite Ende (11.2, 12.2) einer der neigbaren Plattformen (11, 12) befestigt wird.

10. Futterspendevorrichtung mit erhöhtem Leistungsvermögen nach einem der vorhergehenden Ansprüche, **dadurch gekennzeichnet, dass** die mindestens eine neigbare Plattform (11, 12) eine zweite Befestigungseinrichtung zur Befestigung der Ballen (4) an dem zweiten Ende (11.2, 12.2) der neigbaren Plattform aufweist.

11. Futterspendevorrichtung mit erhöhtem Leistungsvermögen nach Anspruch 4, **dadurch gekennzeichnet, dass** die Einrichtung zum Antreiben des ersten Endes (11.1, 12.1) der mindestens einen neigbaren Plattform (11, 12) durch einen Pneumatikzylinder oder einen Hydraulikzylinder (14) gebildet ist.

12. Futterspendevorrichtung mit erhöhtem Leistungsvermögen nach einem der vorhergehenden Ansprüche, **dadurch gekennzeichnet, dass** die mindestens eine neigbare Plattform (11, 12) seitliche Befestigungsmittel für die Ballen (4) aufweist.

13. Futterspendevorrichtung mit erhöhtem Leistungsvermögen nach Anspruch 12, **dadurch gekennzeichnet, dass** die seitlichen Befestigungsmittel für die Ballen (4) mindestens einen geneigten seitlichen Stab (18) umfassen, der aus der mindestens einen neigbaren Plattform (11, 12) hervorsteht.

## Revendications

1. Dispositif distributeur de fourrage perfectionné, du type utilisé pour distribuer du fourrage pour du bétail, formé par un chariot propulsé (1) adaptable à des moyens pour se déplacer sur la surface sur laquelle ladite alimentation a lieu, qui comprend, sur la partie arrière dans la direction de déplacement du chariot, une zone de déroulement (2) présentant une première surface de défrichage (2.1) sur laquelle un première balle de foin cylindrique (4) est disposée et, sur la partie avant, une zone de dépôt de balle de foin (3) présentant une seconde surface de dépôt inclinée (3.1), adaptée pour au moins une balle de foin supplémentaire (4), dans lequel cette zone de dépôt de balle de foin (3) peut être inclinée sur la zone de déroulement (2), dans lequel ladite zone de déroulement (2) comprend un moyen pour pousser la première balle de foin (4) vers l'extrémité du chariot, ladite extrémité présentant une ouverture (5) au travers de laquelle la balle de foin déroulée (20) sort, dont la hauteur est définie par une série de lames (6) qui tournent autour d'un point horizontal simultanément avec l'action du moyen de poussée et, dans leur mouvement, poussent la balle de foin (4) vers la partie avant de la zone de déroulement (2), provoquant la rotation et le déroulement de la balle de foin (4), **caractérisé en ce qu'**il comprend au moins une première plateforme de stockage et de déchargement à inclinaison (11, 12) disposée au-dessus de la première surface de défrichage (2.1) ou la seconde surface inclinée (3.1) de la zone de dépôt,à une hauteur étant supérieure à celle du diamètre des balles de foin (4) disposées sur lesdites surfaces respectivement et dans lequel ladite au moins une plateforme à inclinaison (11, 12) présente une première extrémité (11.1, 12.1) pour le déchargement des balles de foin sur le chariot propulsé (1) et une seconde extrémité opposée (11.2, 12.2) pour la retenue des balles de foin, ainsi qu'un moyen de fixation et un moyen d'inclinaison de ladite au moins une plateforme à inclinaison (11, 12).

2. Dispositif distributeur de fourrage perfectionné selon la revendication 1, **caractérisé en ce qu'**il comprend deux plateformes à inclinaison (11, 12), une plateforme avant et arrière dans la direction de déplacement, où les deux plateformes à inclinaison (11, 12) peuvent être actionnées indépendamment et sont disposées de sorte que la distance entre les secondes extrémités respectives (11.2, 12.2) de celles-ci soit supérieure à la somme des longueurs des deux plateformes à inclinaison (11, 12).

3. Dispositif distributeur de fourrage perfectionné selon la revendication 2, **caractérisé en ce que** les deux plateformes à inclinaison (11, 12) présentent une capacité de balle de foin différente (4).

4. Dispositif distributeur de fourrage perfectionné selon l'une quelconque des revendications précédentes, **caractérisé en ce que** les moyens d'inclinaison de l'au moins une plateforme d'inclinaison (11, 12) comprennent un moyen pour l'actionnement de la première extrémité (11.1, 12.1) de celle-ci, et un point de support et de rotation (13) sur sa seconde extrémité (11.2, 12.2).

5. Dispositif distributeur de fourrage perfectionné selon l'une quelconque des revendications précédentes, **caractérisé en ce que** l'au moins une plateforme à inclinaison (11, 12) présente une première position de chargement du chariot propulsé (1) avec une inclinaison de sorte que la première extrémité (11.1, 12.1) de celle-ci soit supérieure à sa seconde extrémité (11.2, 12.2), une seconde position de chargement et de stockage de ladite au moins une plateforme à inclinaison (11, 12) présentant une inclinaison à proximité de l'horizontale de sorte que la première extrémité (11.1, 12.1) soit supérieure à sa seconde extrémité (11.2, 12.2) et une troisième position de déchargement dans lequel ladite au moins une plateforme à inclinaison (11, 12) est disposée inclinée sur le chariot propulsé (1) avec sa première extrémité (11.1, 12.1) dans une position en dessous de sa seconde extrémité (11.2, 12.2).

6. Dispositif distributeur de fourrage perfectionné selon l'une quelconque des revendications précédentes, **caractérisé en ce que** lorsque l'au moins une plateforme à inclinaison (11, 12) est la plateforme à inclinaison arrière (11) il comprend des moyens de fixation de la seconde position de chargement et de stockage de celle-ci.

7. Dispositif distributeur de fourrage perfectionné selon la revendication 6, **caractérisé en ce que** les moyens de fixation de la seconde position de chargement et de stockage sont formés par des barres de support correspondantes (15) pliables sur une première extrémité (15.1) de celles-ci, fixés respectivement à un côté de la zone de dépôt (3) et une seconde extrémité libre (15.2) qui dans la seconde position de chargement et de stockage est couplée à un côté, respectivement, de la base de ladite plateforme à inclinaison (11).

8. Dispositif distributeur de fourrage perfectionné selon l'une quelconque des revendications 6 et 7, **caractérisé en ce que** ladite au moins une plateforme à inclinaison arrière (11) comprend des premiers moyens pour la fixation des balles de foin (4) à la première extrémité (11.1) de celle-ci.

9. Dispositif distributeur de fourrage perfectionné selon l'une quelconque des revendications précédentes, **caractérisé en ce que** les moyens de fixation entre l'au moins une plateforme d'inclinaison (11, 12) et le chariot propulsé (1) sont formés par au moins deux barres de fixation latérales (19) et une barre de jonction horizontale (17) entre eux, à laquelle la seconde extrémité (11.2, 12.2) d'une des plateformes à inclinaison (11, 12) est fixée.

10. Dispositif distributeur de fourrage perfectionné selon l'une quelconque des revendications précédentes, **caractérisé en ce que** l'au moins une plateforme à inclinaison (11, 12) comprend des seconds moyens de fixation pour la fixation des balles de foin (4) sur la seconde extrémité (11.2, 12.2) de ladite plateforme à inclinaison.

11. Dispositif distributeur de fourrage perfectionné selon la revendication 4, **caractérisé en ce que** les moyens pour l'actionnement de la première extrémité (11.1, 12.1) de l'au moins une plateforme à inclinaison (11, 12) sont formés par un vérin pneumatique ou hydraulique (14).

12. Dispositif distributeur de fourrage perfectionné selon l'une quelconque des revendications précédentes, **caractérisé en ce que** l'au moins une plateforme à inclinaison (11, 12) comprend des moyens de fixation latéraux des balles de foin (4).

13. Dispositif distributeur de fourrage perfectionné selon la revendication 12, **caractérisé en ce que** les moyens de fixation latéraux des balles de foin (4) comprennent au moins une barre latérale inclinée (18) qui émerge de l'au moins une plateforme à inclinaison (11, 12).
